# EUROPÄISCHE PATENTSCHRIFT

(11) **EP 0 582 610 B1**
(45) Veröffentlichungstag und Bekanntmachung des Hinweises auf die Patenterteilung: **31.07.1996**
(21) Anmeldenummer: 92909184.1
(22) Anmeldetag: 23.04.1992
(51) Int. Cl.: C08G 77/12, C08G 77/18, C07F 7/08

(54) **ORGANO(POLY)SILOXANE, DEREN HERSTELLUNG UND VERWENDUNG**
ORGANO(POLY)SILOXANES, THEIR PRODUCTION AND USE
ORGANO(POLY)SILOXANES, LEUR FABRICATION ET LEUR UTILISATION

(30) Priorität: 25.04.1991 DE 4113554
(43) Veröffentlichungstag der Anmeldung: 16.02.1994
(73) Patentinhaber: WACKER-CHEMIE GMBH, D-81737 München (DE)
(72) Erfinder: STEPP, Michael, D-8263 Burghausen (DE); MÜLLER, Johann, D-8263 Burghausen (DE)
(86) Internationale Anmeldenummer: EP9200899
(87) Internationale Veröffentlichungsnummer: WO9219667

(56) Entgegenhaltungen:
- EP-A- 0 022 976
- WO-A-91/16371

## Beschreibung

Die Erfindung betrifft Organo(poly)siloxane, deren Herstellung und Verwendung.

Lineare Organo(poly)siloxane mit unterschiedlichen terminalen Endgruppen, wobei eine Endgruppe eine Triorganosiloxygruppe und eine Endgruppe eine kondensationsfähige Gruppe, wie Hydroxyl- oder Alkoxygruppe ist, sind beispielsweise aus EP-A-311 061 (offengelegt 12. April 1989, Ona Isao et al., Toray Silicone Company), DE-A-39 39 482 (offengelegt 31. Mai 1990, Kogure et al., Kansai Paint Co.) und DE-A-39 32 231 (offengelegt 29. März 1990, Yoshioka et al., Shin-Etsu Chemical Co.) bekannt.

Gegenstand der Erfindung sind Organo(poly)siloxane der allgemeinen Formel

(R¹O)ₐHSiR₂₋ₐO[SiR₂O]ₙSiR₂R² (I)

worin R und R² jeweils gleich oder verschieden sind, einen einwertigen, gegebenenfalls substituierten Kohlenwasserstoffrest bedeuten,
R¹ gleich oder verschieden ist, einen einwertigen, gegebenenfalls substituierten Kohlenwasserstoffrest bedeutet,
n eine ganze Zahl von mindestens 2 und
a 1 oder 2 ist.

Vorzugsweise bedeuten R und R² einen einwertigen, gegebenenfalls substituierten Kohlenwasserstoffrest mit 1 bis 13 Kohlenstoffatom(en) je Rest.

Vorzugsweise bedeutet R¹ einen Alkylrest mit 1 bis 13 Kohlenwasserstoffatom(en) je Rest, der durch ein Ethersauerstoffatom substituiert sein kann.

Vorzugsweise ist n eine ganze Zahl von 3 bis 1 000, bevorzugt von 9 bis 100.

Obwohl durch Formel (I) nicht dargestellt, können bis zu 5 Molprozent der Diorganosiloxaneinheiten durch andere Siloxaneinheiten, wie beispielsweise RSiO_{3/2}- und/oder SiO_{4/2}- Einheiten, ersetzt sein, wobei R die oben dafür angegebene Bedeutung hat. Des weiteren können die Organo(poly)siloxane gemäß Formel (I) - obwohl ebenfalls nicht in Formel (I) dargestellt - herstellungsbedingt bis zu 20 Molprozent andere funktionelle Gruppen, wie beispielsweise Hydroxylgruppen, enthalten. Ferner können die erfindungsgemäßen Organo(poly)siloxane, obwohl in Formel (I) nicht angegeben, herstellungsbedingt in einem geringen Umfang auch -OSiH(OR¹)-Gruppen bzw.(R¹O)SiR₂-Gruppen enthalten, wobei R und R¹ die oben dafür angegebene Bedeutung haben.

Beispiele für Kohlenwasserstoffreste R und R² sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste sind Halogenalkylreste, wie der 3,3,3-Trifluor-n-propylrest, 2,2,2,2',2',2'-Hexafluorisopropylrest, der Heptafluorisopropylrest; Halogenarylreste, wie der o-, m- und p-Chlorphenylrest; und Acyloxyalkylreste, wie der Acetoxyethylrest und (Meth)acryloxypropylrest.

Beispiele für Alkylreste R und R² gelten im vollen Umfang für Alkylreste R¹. Beispiele für Alkylreste R¹, die durch ein Ethersauerstoffatom substituiert sind, sind Alkoxyalkylreste, wie der Methoxyethyl- und Ethoxyethylrest.

Bevorzugt bedeutet R ein Alkylrest, besonders bevorzugt ein Methylrest.

Besonders bevorzugt bedeutet R¹ ein Ethylrest.

Bevorzugt bedeutet R² ein Alkylrest, Alkenylrest oder substituierter Kohlenwasserstoffrest, besonders bevorzugt ein Methyl-, Vinyl-, Allyl- oder (Meth)acryloxypropylrest.

Beispiele für die erfindungsgemäßen Organo(poly)siloxane sind solche der Formel

(MeO)₂HSiO[SiMe₂O]ₙSiMe₃ ,

(EtO)₂HSiO[SiMe₂O]ₙSiMe₃ ,

(MeO)₂HSiO[SiMe₂O]ₙSiMe₂CH=CH₂ ,

(EtO)₂HSiO[SiMe₂O]ₙSiMe₂CH=CH₂ ,

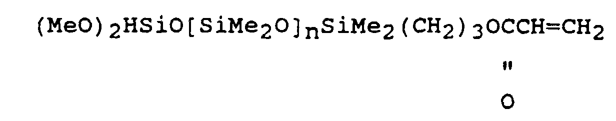

und 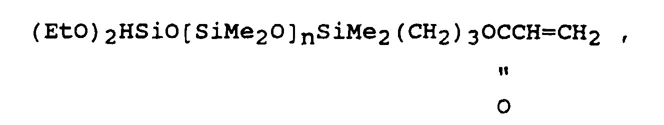 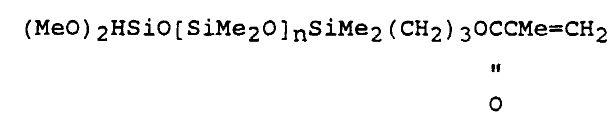 und 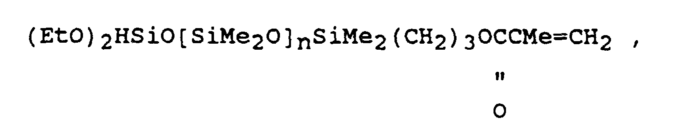 wobei Me ein Methylrest, Et einen Ethylrest ist und n die oben dafür angegebene Bedeutung hat.

Die erfindungsgemäßen Organo(poly)siloxane besitzen eine Viskosität von vorzugsweise 1 bis 10 000 mPa·s bei 23°C.

Die erfindungsgemäßen Organo(poly)siloxane werden vorzugsweise durch Umsetzung von α-Hydroxyorgano(poly)siloxan der Formel

R²R₂Si[OSiR₂]ₙOH (II)

mit Silan der Formel

(R¹O)ₐHSiR₂₋ₐX (III) ,

worin R, R¹, R², n und a die oben dafür angegebene Bedeutung haben und X eine leicht abspaltbare Gruppe bedeutet, hergestellt.

Vorzugsweise bedeutet X ein Chloratom oder eine Gruppe der Formel 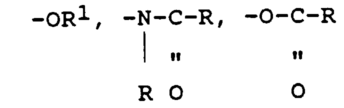 und -NR₂, bevorzugt -OR¹, wobei R und R¹ die oben dafür angegebene Bedeutung haben.

Obwohl durch Formel (II) nicht dargestellt, können bis zu 5 Molprozent der Diorganosiloxaneinheiten durch andere Siloxaneinheiten, wie beispielsweise RSiO_{3/2}- und/oder SiO_{4/2}- Einheiten, ersetzt sein, wobei R die oben dafür angegebene Bedeutung hat.

Beispiele für die im erfindungsgemäßen Verfahren eingesetzten α-Hydroxyorgano(poly)siloxane gemäß Formel (II) sind solche der Formel

Me₃Si[OSiMe₂]ₙOH ,

(CH₂=CH)Me₂Si[OSiMe₂]ₙOH ,

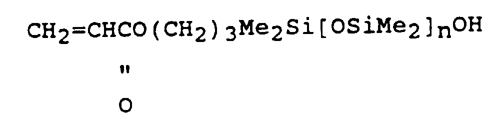

und 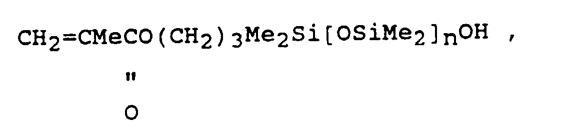 wobei Me ein Methylrest, Et einen Ethylrest ist und n die oben dafür angegebene Bedeutung hat.

Die im erfindungsgemäßen Verfahren eingesetzten α-Hydroxyorgano(poly)siloxane besitzen bei 23°C vorzugsweise eine Viskosität von 1 bis 10 000 mPa·s, bevorzugt von 10 bis 1 000. mPa·s.

Bei dem im erfindungsgemäßen Verfahren eingesetzten α-Hydroxyorgano(poly)siloxan der Formel (II) kann es sich um eine einzelne Art wie auch um ein Gemisch aus mindestens zwei verschiedenen Arten derartiger α-Hydroxyorgano(poly)siloxane handeln.

Die im erfindungsgemäßen Verfahren eingesetzten α-Hydroxyorgano(poly)siloxane gemäß Formel (II) sind nach bekannten Verfahren durch Ringöffnungspolymerisation von Hexaorganocyclotrisiloxanen herstellbar (z.B. DE-B-1 720 496, DE-B-1 770 140, EP-A-331 753, EP-A-338 577 und EP-A-362 710).

Beispiele für die im erfindungsgemäßen Verfahren eingesetzten Silane der Formel (III) sind Hydrogentriethoxysilan, Hydrogentrimethoxysilan, Hydrogenmethyldiethoxysilan, Hydrogenmethyldimethoxysilan und Hydrogenvinyldimethoxysilan.

Bei dem erfindungsgemäßen Verfahren wird Silan der Formel (III) vorzugsweise in Mengen von 1 bis 10 Mol, bevorzugt in Mengen von 1 bis 4 Mol, jeweils bezogen auf 1 Mol α-Hydroxyorgano(poly)siloxan der Formel (II), eingesetzt.

Bei dem im erfindungsgemäßen Verfahren eingesetzten Silan der Formel (III) kann es sich um eine einzelne Art wie auch um ein Gemisch aus mindestens zwei verschiedenen Arten derartiger Silane handeln.

Die im erfindungsgemäßen Verfahren eingesetzten Silane der Formel (III) sind handelsübliche Produkte bzw. nach in der Fachwelt bekannten Verfahren herstellbar. Hierzu sei beispielsweise auf M. Wick, G. Kreis, F.-H. Kreuzer, "Silicone", in "Ullmanns Encyklopädie der technischen Chemie", Verlag Chemie, Weinheim, 4. Aufl., 1982, Bd. 21, Seite 485 ff verwiesen.

Vorzugweise wird die erfindungsgemäße Umsetzung von α-Hydroxyorgano(poly)siloxan gemäß Formel (II) mit Silan der Formel (III) in Anwesenheit von Katalysator durchgeführt.

Beispiele für die im erfindungsgemäßen Verfahren eingesetzten Katalysatoren sind Säuren, wie beispielsweise Hexansäure, 2-Ethylhexansäure, Laurinsäure und Malonsäure, Basen, wie beispielsweise Chinolin, sowie Verbindungen mit enolisierbaren Gruppierungen, wie beispielsweise Cumaranon, Dihydrocumarin, Phenole, wie beispielsweise 2,6-Di-tert.-butyl-4-methylphenol, 1,3-Bicarbonylverbindungen, wie beispielsweise Pentandion und Benzoylaceton, Carbonsäureester, wie beispielsweise Essigsäurepropylester, Acetessigsäureallylester, sowie Carbonsäuresalze, wie beispielsweise Calciumoctoat.

Bei dem erfindungsgemäßen Verfahren wird Katalysator vorzugsweise in Mengen von 0 bis 2 Gewichtsprozent, besonders bevorzugt 0 bis 1 Gewichtsprozent, jeweils bezogen auf das Gesamtgewicht an eingesetztem α-Hydroxyorgano(poly)siloxan der Formel (II), eingesetzt.

Das erfindungsgemäße Verfahren wird vorzugsweise bei einer Temperatur von 23 bis 220°C, besonders bevorzugt 50 bis 140°C, und beim Druck der umgebenden Atmosphäre, also etwa bei 1020 hPa, durchgeführt, es kann aber auch bei höheren oder niedrigeren Drücken durchgeführt werden.

Das erfindungsgemäße Verfahren hat den Vorteil, daß die erfindungsgemäßen Organo(poly)siloxane auf einfache Weise, weitgehend selektiv, mit kurzen Reaktionszeiten und hohen Ausbeuten hergestellt werden können.

Die erfindungsgemäßen Organo(poly)siloxane zeichnen sich gegenüber den bekannten Organopolysiloxanen, die an einem Kettenende hydrolysierbare und durch Kondensation vernetzbare Gruppen aufweisen, durch die reaktiveren terminalen Hydrogenalkoxysiloxygruppen aus, was eine Vernetzung in überraschend kurzer Zeit in Anwesenheit von Feuchtigkeit bedingt, wobei die Mitverwendung von Metallkatalysatoren, wie Zinnverbindungen, zur Beschleunigung der Vernetzungsgeschwindigkeit nicht erforderlich ist. Zur Beschleunigung der Vernetzung können katalytische Mengen von Brönsted-Säuren, wie Essigsäure, Ölsäure oder Stearinsäure, mitverwendet werden.

Die erfindungsgemäßen Organo(poly)siloxane können aufgrund der hohen Reaktivität der terminalen Hydrogenalkoxysiloxy-Gruppe mit Feuchtigkeit überall dort eingesetzt werden, wo diese Eigenschaft erwünscht ist.

Die erfindungsgemäßen Organo(poly)siloxane eignen sich als Zusatz in zu Organopolysiloxanelastomeren vernetzbaren Massen. Vorzugsweise werden die erfindungsgemäßen Organo(poly)siloxane den vernetzbaren Massen als Weichmacher und/oder als Mittel zur Verbesserung der Haftung der Elastomere auf Unterlagen, auf denen sie erzeugt wurden, als sogenannte Haftvermittler, zugegeben.

Als vernetzbare Massen, denen die erfindungsgemäßen Organo(poly)siloxane zugesetzt werden, werden vorzugsweise unter Ausschluß von Wasser lagerfähige, bei Zutritt von Wasser bei Raumtemperatur zu Elastomeren vernetzende Organopolysiloxanmassen verwendet. Bevorzugt werden solche Massen verwendet, die
(1) kondensationsfähige Endgruppen aufweisendes Organopolysiloxan,
(2) je Molekül mindestens drei direkt an Silicium gebundene hydrolysierbare Gruppen aufweisende Organosiliciumverbindung und gegebenenfalls
(3) Kondensationskatalysator
enthalten.

Besonders bevorzugt werden unter Abspaltung von Alkoholen zu Elastomeren vernetzbare Organopolysiloxanmassen verwendet. Solche Massen sind dem Fachmann hinlänglich bekannt und sind beispielsweise in der deutschen Anmeldung mit dem Aktenzeichen P 40 29 481.1, US-A-3 334 067, DE-A-38 Ol 389, US-A-3 708 467 und US-A-4 755 578 beschrieben.

Zur Beschleunigung der Feuchtigkeitsvernetzung können die erfindungsgemäßen Organo(poly)siloxane im Gemisch mit katalytischen Mengen an Brönsted-Säuren, wie Essigsäure, Ölsäure oder Stearinsäure, den vernetzbaren Massen zugesetzt werden.

Weiterhin werden als vernetzbare Massen, denen die erfindungsgemäßen Organo(poly)siloxane zugesetzt werden, vorzugsweise durch Anlagerung von Si-gebundenem Wasserstoff an SiC-gebundene Reste mit aliphatischer Kohlenstoff-Kohlenstoff-Mehrfachbindung vernetzbare Organopolysiloxanmassen verwendet. Bevorzugt werden solche Massen verwendet, die
(4) SiC-gebundene Reste mit aliphatischer Kohlenstoff-Kohlenstoff-Mehrfachbindung aufweisendes Organopolysiloxan, insbesondere Si-gebundene Vinylgruppen aufweisendes Organopolysiloxan,
(5) Si-gebundene Wasserstoffatome aufweisendes Organopolysiloxan,
(6) Katalysator und gegebenenfalls
(7) Inhibitor.
enthalten. Solche Massen sind dem Fachmann hinlänglich bekannt und sind beispielsweise in der deutschen Anmeldung DE-A-40 25 281.7 & EP-A-0 544 674, US-A 4 855 378 und CA-A 11 80 482 beschrieben.

Schließlich werden als vernetzbare Massen, denen die erfindungsgemäßen Organo(poly)siloxane zugesetzt werden, vorzugsweise solche Organopolysiloxanmassen verwendet, bei denen die Vernetzung durch freie Radikale bildende Mittel erfolgt. Beispiele für derartige Mittel sind peroxidische Verbindungen, wie Acylperoxide, z.B. Dibenzoylperoxid, Bis(4-chlorbenzoyl)-peroxid und Bis-(2,4-dichlorbenzoyl)peroxid; Alkylperoxide und Arylperoxide, wie Di-tert.-butylperoxid und Dicumylperoxid; Perketale, wie 2,5-Bis(tert.-butylperoxy)-2,5-dimethylhexan; Perester, wie Diacetylperoxy-dicarbonat, tert.-Butylperbenzoat und tert.-Butylperisononanoat; tert.-Butyl-beta-hydroxyethylperoxid; und als freie Radikale bildende Mittel bekannte Azoverbindungen, wie Azoisobuttersäurenitril.

Die erfindungsgemäßen Organo(poly)siloxane werden den vernetzbaren Massen in Mengen von vorzugsweise 1 bis 60 Gew.-%, bevorzugt 2 bis 30 Gew.-%, jeweils bezogen auf das Gesamtgewicht der vernetzbaren Massen, zugegeben.

Die erfindungsgemäßen Organo(poly)siloxane können weiterhin zur Modifizierung von organischen Polymeren, wie Polyvinylchlorid, Polyurethane, Polyamide und Polyacrylate, z.B. als Schlagzähmodifier oder Weichmacher, eingesetzt werden oder zur Beschichtung von Oberflächen, z.B. als Bestandteil von Enteisungsmitteln oder Trennmitteln, wie Reifentrennmitteln, verwendet werden.

### Beispiel 1:

Eine Mischung aus 96 g (0,08 Mol) eines α-Hydroxyorganopolysiloxans der mittleren Formel

(CH₃)₃Si[OSi(CH₃)₂]₁₅OH ,

49,2 g (0,1 Mol) Triethoxysilan und 0,72 g (3,6 mMol) 2,6-Bis(tert.butyl)-4-methylphenol wurde eine Stunde bei 100°C gerührt. Nach Abziehen der flüchtigen Bestandteile am Rotationsverdampfer bei 60°C und 5 mbar verblieben 103,5 g eines klaren farblosen Öles, aus dessen ²⁹Si-NMR-Spektrum sich die folgende Struktur ergab:

(CH₃)₃Si[OSi(CH₃)₂]₁₅OSiH(OC₂H₅)₂

### Beispiel 2:

Eine Mischung aus 96 g (0,08 Mol) eines α-Hydroxyorqanopolysiloxans der mittleren Formel

(H₂C=CH)(CH₃)₂Si[OSi(CH₃)₂]₁₅OH ,

49,2 g (0,1 Mol) Triethoxysilan und 0,72 g (3,6 mMol) 2,6-Bis(tert.butyl)-4-methylphenol wurde eine Stunde bei 100°C gerührt. Nach Abziehen der flüchtigen Bestandteile am Rotationsverdampfer bei 60°C und 5 mbar verblieben 103,5 g eines klaren farblosen Öles, aus dessen ²⁹Si-NMR-Spektrum sich die folgende Struktur ergab:

(H₂C=CH)(CH₃)₂Si[OSi(CH₃)₂]₁₅OSiH(OC₂H₅)₂

### Beispiel 3:

Eine Mischung aus 32,4 g (0,1 Mol) eines α-Hydroxyorganopolysiloxans der mittleren Formel

(H₂C=CH)(CH₃)₂Si[OSi(CH₃)₂]₃OH ,

(Herstellung gemäß DE-AS 29 18 312 durch Umsetzung von Hexamethylcyclotrisiloxan mit Vinyldimethylchlorsilan und anschließender Hydrolyse des Umsetzungsproduktes

(H₂C=CH)(CH₃)₂Si[OSi(CH₃)₂]₃Cl)

32,8 g (0,2 Mol) Triethoxysilan und 0,3 g 2,6-Bis(tert.butyl)-4-methylphenol wurde eine Stunde bei 100°C gerührt. Nach Abkühlen auf 30°C wurde am Rotationsverdampfer im Vakuum bei 10 mbar eingeengt. Als Rückstand verblieben 44,0 g eines klaren Öles, aus dessen ²⁹Si-NMR-Spektrum und ¹H-NMR-Spektrum sich die folgende Struktur ergab:

(H₂C=CH)(CH₃)₂Si[OSi(CH₃)₂]₄OSiH(OC₂H₅)₂

### Beispiel 4:

Eine unter dem Einfluß von (Luft-)Feuchtigkeit härtende Organopolysiloxanmasse wurde erhalten durch Abmischen von 60 Gewichtsteilen eine α,ω-Dihydroxydimethylpolysiloxans mit einer Viskosität von 80 000 mPa·s bei 23°C, 46 Gewichtsteilen des in Beispiel 1 erhaltenen H-alkoxyfunktionellen Organopolysiloxans, 11,5 Gewichtsteilen eines Si-gebundene Ethoxy-Gruppen aufweisenden Siliconharzes, das durch Umsetzung von 164 Gewichtsteilen Triethoxysilan mit 13,5 Gewichtsteilen Wasser in Gegenwart von 100 Gew.-ppm Essigsäure hergestellt wurde, 11,5 Gewichtsteilen pyrogener Kieselsäure (käuflich erwerblich unter dem Handelsnamen Aerosil R972 bei der Fa. Degussa) und 0,5 Gewichtsteilen Ölsäure (käuflich erwerblich bei der Fa. Merck).

Zur vollständigen Vulkanisation ließ man in einer Schicht von 2 mm Dicke an Luft zwei Wochen bei Raumtemperatur aushärten. Die mechanischen Werte des Elastomers wurden daraufhin an geeigneten Probekörpern gemessen. Der extrahierbare Anteil wird durch Quellung der kleingeschnittenen Probekörper in Toluol (5 Tage bei Raumtemperatur) ermittelt. Die Ergebnisse sind in Tabelle 1 zusammengefaßt.

### Vergleichsversuch 1:

Die Arbeitsweise von Beispiel 4 wurde wiederholt mit der Abänderung, daß 46 Gewichtsteile eines mit Trimethylsiloxygruppen endblockierten Dimethylpolysiloxans mit einer Viskosität von 100 mPa·s bei 23°C anstelle der 46 Gewichtsteile des H-alkoxyfunktionellen Organopolysiloxans verwendet wurden. Die Ergebnisse sind in Tabelle 1 zusammengefaßt.

### Vergleichsversuch 2:

Die Arbeitsweise von Beispiel 4 wurde wiederholt mit der Abänderung, daß 46 Gewichtsteile des α,ω-Dihydroxydimethylpolysiloxans mit einer Viskosität von 80 000 mPa·s bei 23°C anstelle der 46 Gewichtsteile des H-alkoxyfunktionellen Organopolysiloxans verwendet wurden. Die Ergebnisse sind in Tabelle 1 zusammengefaßt.

**Tabelle 1:**

| | Beispiel | Vergleichsversuch | |
|---|---|---|---|
| | 4 | 1 | 2 |
| Shore Härte A | 26 | 28 | 45 |
| Reißfestigkeit (N/mm²) | 1,3 | 1,4 | -- |
| Reißdehnung (%) | 320 | 350 | -- |
| Weiterreißwiderstand (N/mm) | 4,4 | 4,3 | -- |
| extrahierbarer Anteil (Gew.-%) | 13,5 | 38,0 | 4,0 |

Berücksichtigt man den Blindwert beim Vergleichsversuch 2 (ohne Weichmacher) an extrahierbaren Bestandteilen, so ist der Anteil an ausschwitzbarem Weichmacher beim Vergleichsversuch 1 (herkömmlicher Weichmacher) um das 3,2-fache höher als beim Beispiel 4 (erfindungsgemäßer Weichmacher). Die mechanischen Eigenschaften des Elastomers werden dagegen nicht beeinflußt.

### Beispiel 5:

a) Komponente A
   58,9 g eines α,ω-Divinyldimethylpolysiloxans mit einer Kettenlänge von etwa 900 Siloxaneinheiten und einer Viskosität von 20 000 mPa·s, 33 g Quarzmehl (käuflich erhältlich unter der Bezeichnung Silbond 600TST bei Quarzwerke GmbH, D-5020 Frechen), 0,005 g H₂PtCl₆·6H₂O im Gemisch mit 0,2 g Isopropanol und 0,25 g 1,3-Divinyltetramethyldisiloxan wurden gut vermischt.
b) Komponente B
   50,9 g eines α,ω-Divinyldimethylpolysiloxans mit einer Kettenlänge von etwa 900 Siloxaneinheiten und einer Viskosität von 20 000 mPa·s, 19,3 g silylierte Kieselsäure (käuflich erhältlich unter der Bezeichnung T30 bei der Wacker-Chemie GmbH, D-8000 München), 19,3 g Quarzmehl (käuflich erhältlich unter der Bezeichnung Silbond 600TST bei Quarzwerke GmbH, D-5020 Frechen), 7 g eines Mischpolymerisats aus Trimethylsiloxan-, Dimethylsiloxan- und Methylhydrogensiloxaneinheiten mit einem Molverhältnis von Dimethylsiloxaneinheiten zu Methylhydrogensiloxaneinheiten von 1:1 und einer Viskosität von 60 mPa·s und 0,175 g 1-Ethinylcyclohexanol wurden gut vermischt.

Eine Mischung aus 2,5 g der oben beschriebenen Komponente A und 2,5 g der oben beschriebenen Komponente B wurde mit 0,4 g des Organopolysiloxans, dessen Herstellung in Beispiel 3 beschrieben ist, versetzt und auf den jeweiligen in Tabelle 2 angegebenen Substraten bei 40°C beziehungsweise 80°C binnen 1 Stunde ausgehärtet. Die Prüfung der Haftung erfolgte im Reißtest. Die Ergebnisse sind in Tabelle 2 zusammengefaßt. Durch zusätzliche Zugabe von 0,05 g Essigsäure zu der oben beschriebenen Mischung konnte gute Haftung sogar auf Kunststoffen sofort nach der Vulkanisation erreicht werden.

**Tabelle 2:**

| | | |
|---|---|---|
| Glas | 1 h / 80°C | Kohäsionsriß |
| | 1 h / 40°C | Kohäsionsriß |
| | | |
| Aluminium | 1 h / 80°C | Kohäsionsriß |
| | 1 h / 40°C | Kohäsionsriß |
| | | |
| Polycarbonat | 1 h / 80°C | Kohäsionsriß |
| | 1 h / 40°C | keine Haftung |
| | | |
| Polyamid | 1 h / 80°C | Kohäsionsriß |
| | 1 h / 40°C | Kohäsionsriß |
| | | |
| Polyepoxyharz | 1 h / 80°C | Kohäsionsriß |
| | 1 h / 40°C | Kohäsionsriß |
| | | |
| Hart-PVC | 1 h / 80°C | Kohäsionsriß |
| | 1 h / 40°C | keine Haftung |
| Kohäsionriß = Riß im Elastomeren | | |

## Patentansprüche

1. Organo(poly)siloxane der allgemeinen Formel
(R¹O)ₐHSiR₂₋ₐO[SiR₂O]ₙSiR₂R² (I)
worin R und R² jeweils gleich oder verschieden sind, einen einwertigen, gegebenenfalls substituierten Kohlenwasserstoffrest bedeuten,
R¹ gleich oder verschieden ist, einen einwertigen, gegebenenfalls substituierten Kohlenwasserstoffrest bedeutet,
n eine ganze Zahl von mindestens 2 und
a 1 oder 2 ist.

2. Organo(poly)siloxane nach Anspruch 1, dadurch gekennzeichnet, daß n eine ganze Zahl zwischen 3 und 1 000 ist.

3. Verfahren zur Herstellung der Organo(poly)siloxane gemäß Anspruch 1 oder 2 durch Umsetzung von α-Hydroxyorgano(poly)siloxan der Formel
R²R₂Si[OSiR₂]ₙOH (II)
mit Silan der Formel
(R¹O)ₐHSiR₂₋ₐX (III) ,
worin R und R² gleich oder verschieden sind, einen einwertigen, gegebenenfalls substituierten Kohlenwasserstoffrest bedeuten,
R¹ gleich oder verschieden ist, einen einwertigen, gegebenenfalls substituierten Kohlenwasserstoffrest bedeutet,
X eine leicht abspaltbare Gruppe bedeutet,
n eine ganze Zahl von mindestens 2 und
a 1 oder 2 ist.

4. Verfahren nach Anspruch 3, dadurch gekennzeichnet, daß α-Hydroxyorgano(poly)siloxan gemäß Formel (II) mit Silan der Formel (III) in Anwesenheit von Katalysator umgesetzt wird.

5. Verwendung der Organo(poly)siloxane gemäß Anspruch 1 als Zusatz in zu Organopolysiloxanelastomeren vernetzbaren Massen.

6. Verwendung nach Anspruch 5, dadurch gekennzeichnet, daß die Organopolysiloxane gemäß Anspruch 1 als Weichmacher und/oder Mittel zur Verbesserung der Haftung der Elastomeren auf den Unterlagen, auf denen sie erzeugt wurden, verwendet werden.

7. Verwendung nach Anspruch 5 oder 6, dadurch gekennzeichnet, daß als vernetzbare Massen unter Ausschluß von Wasser lagerfähige, bei Zutritt von Wasser bei Raumtemperatur zu Elastomeren vernetzende Organopolysiloxanmassen verwendet werden.

8. Verwendung nach Anspruch 5 oder 6, dadurch gekennzeichnet, daß als vernetzbare Massen durch Anlagerung von Si-gebundenem Wasserstoff an SiC-gebundene Reste mit aliphatischer Kohlenstoff-Kohlenstoff-Mehrfachbindung vernetzbare Organopolysiloxanmassen verwendet werden.

9. Verwendung nach Anspruch 5 oder 6, dadurch gekennzeichnet, daß die Organopolysiloxane gemäß Anspruch 1 in Mengen von 1 bis 60 Gew.-%, bezogen auf das Gesamtgewicht der vernetzbaren Massen, eingesetzt werden.

## Claims

1. Organo(poly)siloxanes of the general formula
(R¹O)ₐHSiR₂₋ₐO[SiR₂O]ₙSiR₂R² (I)
in which R and R² are in each case identical or different and are monovalent, optionally substituted hydrocarbon radicals,
R¹ is identical or different and is a monovalent, optionally substituted hydrocarbon radical,
n is an integer of at least 2 and
a is 1 or 2.

2. Organo(poly)siloxanes according to Claim 1, characterised in that n is an integer between 3 and 1,000.

3. Process for the preparation of the organo(poly)siloxanes according to Claim 1 or 2 by reacting an a-hydroxyorgano(poly)siloxane of the formula
R²R₂Si[OSiR₂]ₙOH (II)
with a silane of the formula
(R¹O)ₐHSiR₂₋ₐX (III)
in which R and R² are identical or different and are monovalent, optionally substituted hydrocarbon radicals,
R¹ is identical or different and is a monovalent, optionally substituted hydrocarbon radical,
X is an easily removable group,
n is an integer of at least 2 and
a is 1 or 2.

4. Process according to Claim 3, characterised in that an α-hydroxyorgano(poly)siloxane of the formula (II) is reacted with a silane of the formula (III) in the presence of a catalyst.

5. Use of the organo(poly)siloxanes according to Claim 1 as additives in compositions which can be crosslinked to give organopolysiloxane elastomers.

6. Use according to Claim 5, characterised in that the organopolysiloxanes according to Claim 1 are used as plasticisers and/or agents for improving the adhesion of elastomers to the substrates on which they have been produced.

7. Use according to Claim 5 or 6, characterised in that the crosslinkable compositions used are organopolysiloxane compositions which have a long shelf life in the absence of water, but crosslink to give elastomers on contact with water at room temperature.

8. Use according to Claim 5 or 6, characterised in that the crosslinkable compositions used are organopolysiloxane compositions which can be crosslinked through the addition reaction of Si-bonded hydrogen with SiC-bonded radicals having an aliphatic carbon-carbon multiple bond.

9. Use according to Claim 5 or 6, characterised in that the organopolysiloxanes according to Claim 1 are employed in amounts of from 1 to 60% by weight, based on the total weight of the crosslinkable compositions.

## Revendications

1. Organo(poly)siloxanes de formule générale
(R¹O)ₐHSiR₂₋ₐO[SiR₂O]ₙSiR₂R² (I)
dans laquelle R et R² sont chacun identiques ou différents, représentent un radical hydrocarbure monovalent, facultativement substitué,
R¹ est identique ou différent, représente un radical hydrocarbure monovalent, facultativement substitué,
n est un nombre entier d'au moins 2 et
a est 1 ou 2.

2. Organo(poly)siloxanes suivant la revendication 1, caractérisés en ce que n est un nombre entier entre 3 et 1000.

3. Procédé de préparation des organo(poly)siloxanes suivant la revendication 1 ou 2, par réaction de l'α-hydroxyorgano(poly)siloxane de formule
R²R₂Si[OSiR₂]ₙOH (II)
avec le silane de formule
(R¹O)ₐHSiR₂₋ₐX (III),
où R et R² sont chacun identiques ou différents, représentent un radical hydrocarbure monovalent, facultativement substitué,
R¹ est identique ou différent, représente un radical hydrocarbure monovalent, facultativement substitué,
X représente un groupe partant,
n est un nombre entier d'au moins 2 et
a est 1 ou 2.

4. Procédé suivant la revendication 3, caractérisé en ce que l'α-hydroxyorgano(poly)siloxane de formule (II) est mis à réagir avec le silane de formule (III) en présence d'un catalyseur.

5. Utilisation des organo(poly)siloxanes suivant la revendication 1, comme additif à des substances réticulables en élastomères organopolysiloxanes.

6. Utilisation suivant la revendication 5, caractérisée en ce que les organopolysiloxanes suivant la revendication 1 sont utilisés comme plastifiant et/ou comme agent pour améliorer l'adhérence des élastomères sur les substrats sur lesquels ils sont produits.

7. Utilisation suivant la revendication 5 ou 6, caractérisée en ce que l'on utilise comme substances réticulables, des substances organopolysiloxanes réticulées en élastomères par apport d'eau à température ambiante, stockables en l'absence d'eau.

8. Utilisation suivant la revendication 5 ou 6, caractérisée en ce que l'on utilise comme substances réticulables, des substances organopolysiloxanes réticulables par addition d'hydrogène à liaison Si sur un radical à liaison SiC avec liaison multiple aliphatique carbone-carbone.

9. Utilisation suivant la revendication 5 ou 6, caractérisée en ce que l'on introduit les organopolysiloxanes suivant la revendication 1 en des quantités de 1 à 60% en poids, sur base du poids total des substances réticulables.
